# EUROPÄISCHE PATENTSCHRIFT

(11) **EP 2 788 236 B1**
(45) Veröffentlichungstag und Bekanntmachung des Hinweises auf die Patenterteilung: **02.03.2016**
(21) Anmeldenummer: 12794191.2
(22) Anmeldetag: 17.11.2012
(51) Int. Cl.: B60T 10/02, F16D 57/04

(54) **ANTRIEBSSTRANG MIT EINEM HYDRODYNAMISCHEN RETARDER UND STEUERUNGSVERFAHREN HIERFÜR**
DRIVELINE WITH HYDRODYNAMIC RETARDER AND CONTROL METHOD THEREFOR
TRANSMISSION AVEC FREIN HYDRODYNAMOQUE ET PROCÉDÉ DE CONTRÔLE CORRESPONDANTE

(30) Priorität: 09.12.2011 DE 102011120614
(43) Veröffentlichungstag der Anmeldung: 15.10.2014
(73) Patentinhaber: Voith Patent GmbH, 89522 Heidenheim (DE)
(72) Erfinder: MENNE, Achim, 74564 Crailsheim (DE); HUTH, Tilman, 74589 Satteldorf (DE); LAUKEMANN, Dieter, 74564 Crailsheim (DE); KOCH, Werner, 73326 Deggingen (DE); KLEMENT, Werner, 89520 Heidenheim (DE); BECKE, Martin, 89075 Ulm (DE); SCHADE, Ravi, 74589 Satteldorf (DE)
(86) Internationale Anmeldenummer: PCT/EP2012/004788
(87) Internationale Veröffentlichungsnummer: WO 2013/083232

(56) Entgegenhaltungen:
- WO-A1-2008/046381
- DE-A1- 19 817 865
- DE-C1- 4 324 460
- US-A1- 2003 064 853

## Beschreibung

Die vorliegende Erfindung betrifft einen Antriebsstrang mit einem hydrodynamischen Retarder im Einzelnen gemäß dem Oberbegriff von Anspruch 1, sowie ein Verfahren zum Steuern der Betätigung eines solchen hydrodynamischen Retarders gemäß dem Oberbegriff von Anspruch 10.

Hydrodynamische Retarder, die als verschleißfreie Dauerbremsen beispielsweise in Kraftfahrzeugen sowohl auf der Schiene als auch auf der Straße, letzteres insbesondere in Lastkraftwagen, eingesetzt werden, weisen im Nichtbremsbetrieb Leerlaufverluste auf, auch wenn der Arbeitsraum, der zwischen dem Rotor und dem Stator beziehungsweise bei Gegenlaufretardern zwischen dem Rotor und einem gegenläufig angetriebenen Gegenlaufrotor gebildet wird, weitgehend oder bis auf eine vorbestimmte Restarbeitsmediummenge vom Arbeitsmedium entleert ist. Um die Leerlaufverluste vollständig zu eliminieren, wurden hydrodynamische Retarder vorgeschlagen, die mittels einer Trennkupplung vom Antriebsstrang abkoppelbar sind. Beispielsweise wird auf die folgenden Dokumente verwiesen:
US2003/064853A1;
DE19817865A1;
DE4324460 C1
EP 2 024 209 B1
DE 199 27 397 A1
DE 10 2005 052 121 A1
DE 10 2009 001 146 A1.

Eine solche Trennkupplung ist jedoch anfällig für eine schädigende Überlastung, beispielsweise wenn sie durch ungünstige Randbedingungen oder durch eine Fehlfunktion geschlossen wird, obwohl der hydrodynamische Retarder noch ein Bremsmoment erzeugt, und sie bedingt einen nachteiligen Integrationsaufwand sowie einen zusätzlichen Servicebedarf, wenn sie beispielsweise in ein Kraftfahrzeuggetriebe integriert oder außen an diesem angeschlossen wird.

Der vorliegenden Erfindung liegt die Aufgabe zugrunde, einen Antriebsstrang mit einem hydrodynamischen Retarder anzugeben, dessen Leerlaufverluste über die Entleerung des Arbeitsraums vom Arbeitsmedium hinaus reduziert werden können, ohne auf die bekannten mit Nachteilen behafteten Reibkupplungen zum Zu- und Abschalten des hydrodynamischen Retarders zurückgreifen zu müssen.

Die erfindungsgemäße Aufgabe wird durch einen Antriebsstrang mit den Merkmalen von Anspruch 1 sowie ein Verfahren mit den Merkmalen von Anspruch 10 gelöst. In den abhängigen Ansprüchen sind vorteilhafte und besonders zweckmäßige Ausgestaltungen der Erfindung angegeben.

Der erfindungsgemäße Antriebsstrang weist einen hydrodynamischen Retarder auf, mittels welchem der Antriebsstrang hydrodynamisch abbremsbar ist. Der Antriebsstrang ist beispielsweise ein Kraftfahrzeugantriebsstrang, insbesondere eines Schienenfahrzeugs oder Straßenfahrzeugs, beispielsweise Lastkraftwagens. Hierzu weist der Antriebsstrang dann einen Antriebsmotor, insbesondere Verbrennungsmotor auf, dessen Antriebsleistung über ein Getriebe, insbesondere Stufenschaltgetriebe auf Antriebsräder übertragen wird. Der hydrodynamische Retarder kann sowohl primärseitig als auch sekundärseitig des Getriebes im Antriebsstrang positioniert sein. Eine besonders Anordnung ist an einem PTO (Nebenabtrieb) des Verbrennungsmotors.

Erfindungsgemäß weist der hydrodynamische Retarder einen angetriebenen Rotor und einen Stator auf, welche gemeinsam einen mit Arbeitsmedium befüllbaren oder von diesem entleerbaren Arbeitsraum ausbilden. Wenn ein Gegenlaufretarder dargestellt werden soll, kann auch ein in eine erste Richtung angetriebener Rotor und ein in die entgegengesetzte Richtung angetriebener Gegenlaufrotor vorgesehen sein, die dann gemeinsam den Arbeitsraum ausbilden. Auch mehrflutige Retarder mit mehreren Arbeitsräumen kommen in Betracht.

Erfindungsgemäß ist nun der hydrodynamische Retarder über ein Planetengetriebe an einem die Antriebsleistung zu dem hydrodynamischen Retarder führenden Element des Antriebsstrangs angeschlossen, welches eine Abkopplung oder zumindest Reduzierung des Leistungsflusses zum hydrodynamischen Retarder ermöglicht, so dass der Rotor des Retarders nicht mehr angetrieben wird. Das die Antriebsleistung zu dem hydrodynamischen Retarder führende Element kann beispielsweise eine Welle im oder am Getriebe oder, wie dargestellt, die Welle eines PTO eines Verbrennungsmotors sein. Auch eine andere Welle, beispielsweise in Richtung des Antriebsleistungsflusses hinter dem Getriebe, beispielsweise in oder an der Gelenkwelle, kommt in Betracht.

Neben einer Welle als die Antriebsleistung auf den hydrodynamischen Retarder übertragendes Element kommen auch andere drehmomentübertragende Bauteile in Betracht.

Das Planetengetriebe umfasst ein Sonnenrad, ein Hohlrad, und wenigstens ein auf einem Planetenträger getragenes Planetenrad. Es kommen auch mehrere auf dem Planetenträger getragene Planetenräder in Betracht.

Erfindungsgemäß ist das Hohlrad an dem die Antriebsleistung zu dem hydrodynamischen Retarder führenden Element angeschlossen. Unter Anschluss ist jede geeignete Triebverbindung zu verstehen, sodass das Hohlrad von dem die Antriebsleistung zu dem hydrodynamischen Retarder führenden Element angetrieben wird.

Das Sonnenrad ist an dem Rotor des hydrodynamischen Retarders angeschlossen, wobei bezüglich des Anschlusses das zuvor Gesagte gilt. Jede geeignete Triebverbindung, mittels welcher das Sonnenrad Antriebsleistung beziehungsweise Drehmoment auf den Rotor des hydrodynamischen Retarders überträgt, kommt in Betracht. Somit stellt das Hohlrad den Eingang für die Leistungsübertragung in das Planetengetriebe und das Sonnenrad den Ausgang für die Leistungsübertragung aus dem Planetengetriebe bezüglich der Leistungsübertragung von Antriebsleistung dar. Umgekehrt wird die Bremsleistung beziehungsweise das Bremsmoment des hydrodynamischen Retarders rückwärts über das Planetengetriebe, das heißt vom Sonnenrad über das wenigstens eine zwischengeschaltete Planetenrad auf das Hohlrad und weiter auf das Element im Antriebsstrang, das das Planetengetriebe mit dem Antriebsstrang verbindet, übertragen.

Erfindungsgemäß ist dem Planetenträger eine Bremse zugeordnet, mittels welcher der Planetenträger in einem ersten Betriebszustand freigebbar ist und in einem zweiten Betriebszustand abbremsbar und/oder gegen Umlaufen festsetzbar ist. Der erste Betriebszustand entspricht dem Nichtbremsbetrieb des hydrodynamischen Retarders. In einem solchen wird zwar, sofern keine Schaltkupplung vorgesehen ist, was gemäß einer erfindungsgemäßen Ausführungsform möglich ist, das Hohlrad des Planetengetriebes weiter mit Antriebsleistung des Antriebsstranges, die beispielsweise im Schubbetrieb von den Rädern des Fahrzeugs in den Antriebsstrang eingespeist wird, angetrieben, jedoch werden dadurch lediglich das oder die Planetenräder mitgeschleppt, ohne eine Drehung oder nennenswerte Drehung des Sonnenrades und damit des Rotors des hydrodynamischen Retarders. Somit werden im Retarder entstehende Leerlaufverluste weitgehend oder vollständig vermieden.

Im zweiten Betriebszustand, dem Bremsbetrieb des hydrodynamischen Retarders hingegen arbeitet das Planetengetriebe als mechanische Leistungsübertragung, sodass die gesamte beziehungsweise nahezu die gesamte auf das Hohlrad übertragene Antriebsleistung über das wenigstens eine Planetenrad auf das Sonnenrad und damit zum Rotor des hydrodynamischen Retarders übertragen wird. Besonders günstig ist, dass durch das Planetengetriebe eine besonders große Übersetzung zwischen dem Hohlrad und dem Sonnenrad erzielt werden kann, sodass der Rotor des hydrodynamischen Retarders deutlich schneller umlaufen kann als das die Antriebsleistung zum hydrodynamischen Retarder führende Element, beispielsweise eine Hauptwelle im Fahrzeuggetriebe. Insbesondere kann eine Übersetzung größer als 3 oder 3,5 erreicht werden.

Dadurch, dass erfindungsgemäß eine Bremse zur Unterbrechung oder weitgehenden Unterbrechung der Leistungsübertragung auf den Rotor des hydrodynamischen Retarders verwendet wird, kann eine viel höhere "Schaltarbeit" im Vergleich zu der Verwendung einer Schaltkupplung erzielt werden, ohne dass eine Überlastung der Bremse droht. Hierdurch ist es möglich, den Retarder auch dann in den Leistungsfluss zuzuschalten, wenn dieser nicht vollständig entleert ist. Ein weiterer Vorteil liegt darin, dass die konstruktive Gestaltung der Bremse im Vergleich zu einer Schaltkupplung wesentlich günstiger ist. Beispielsweise kann eine Bremse des Typs verwendet werden, die bei den Kraftfahrzeugschaltgetrieben beziehungsweise Gruppenschaltgetrieben üblicherweise als Vorgelegewellenbremse eingesetzt wird oder eine solche Lamellenbremse, wie sie zur Abbildung der einzelnen Schaltstufen verwendet wird.

Vorteilhaft ist die Bremse als nass- oder trockenlaufende Reibbremse ausgeführt. Beispielsweise kommt eine Lamellenbremse, insbesondere umfassend eine Vielzahl von parallelen Lamellen jeweils mit einer oder mehreren Reibflächen in Betracht. Alternativ kann die Bremse als Synchronelement mit Reibkegel ausgeführt sein. Auch eine hydraulisch oder elektromechanisch betätigte Bremse kommt in Betracht, insbesondere eine solche mit Selbstverstärkung, das heißt, dass die in die Bremse eingeleitete Betätigungskraft durch die dadurch erzeugte Bremswirkung verstärkt wird.

Um eine besonders hohe Momentenübertragungsfähigkeit im geschlossenen Zustand der Bremse, das heißt in einem Zustand, in dem kein Schlupf in der Bremse vorliegt, zu erreichen, kann die Bremse mit einer mechanischen Überbrückungskupplung versehen sein, mittels welcher die Bremse insbesondere formschlüssig überbrückbar ist.

Der Bremse und dem hydrodynamischen Retarder kann ein gemeinsames hydraulisches oder pneumatisches Steuersystem zugeordnet sein, welches einen Steuerdruck erzeugt, mittels welchem das Ein- und Ausschalten des hydrodynamischen Retarders durch Befüllen und Entleeren des Arbeitsraumes gesteuert wird und mittels welchem das Öffnen und Schließen der Bremse gesteuert wird, insbesondere auch das Öffnen und Schließen der Überbrückungskupplung der Bremse.

Günstig ist es, wenn die Bremse einen vom Steuerdruck des gemeinsamen Steuersystems betätigten Aktuator zum Öffnen und Schließen der Bremse aufweist und der hydrodynamische Retarder eine vom Steuerdruck betätigte Befüllungssteuerungseinrichtung aufweist, wobei der Aktuator und die Befüllungssteuerungseinrichtung entgegen dem Steuerdruck derart vorgespannt oder mittels einer Ventileinrichtung vom Steuerdruck zeitweise abgetrennt sind, dass der Aktuator die Bremse bei einem anderen, insbesondere niedrigeren Steuerdruck schließt, als die Befüllungssteuerungseinrichtung den Arbeitsraum des hydrodynamischen Retarders mit Arbeitsmedium befüllt. Somit kann der Steuerdruck einen ersten Steuerdruckbereich aufweisen, in welchem die Bremse geschlossen wird, und einen zweiten Steuerdruckbereich, in welchem der Arbeitsraum des hydrodynamischen Retarders mit Arbeitsmedium befüllt wird, wobei die Bremse geschlossen bleibt. Auch ist es möglich, einen dritten Steuerdruckbereich, insbesondere zwischen dem ersten Steuerdruckbereich und dem zweiten Steuerdruckbereich vorzusehen, in welchem die geschlossene Bremse mittels der Überbrückungskupplung mechanisch überbrückt wird, wobei beim anschließenden oder gleichzeitigen Befüllen des Arbeitsraumes des Retarders mit Arbeitsmedium auch die Überbrückungskupplung geschlossen bleibt.

Das erfindungsgemäße Verfahren zum Steuern der Betätigung eines hydrodynamischen Retarders in einem Antriebsstrang, insbesondere Kraftfahrzeugantriebsstrang der dargestellten Art, sieht vor, dass zum Einschalten des hydrodynamischen Retarders der Planetenträger mittels der Bremse abgebremst und/oder mechanisch gegen ein Umlaufen verriegelt wird und der Arbeitsraum des hydrodynamischen Retarders mit Arbeitsmedium befüllt wird, und zum Ausschalten des hydrodynamischen Retarders der Arbeitsraum vom Arbeitsmedium entleert und die Bremse zum Freigeben des Umlaufens des Planetenträgers geöffnet wird.

Gemäß einer Ausführungsform wird beim Einschalten des hydrodynamischen Retarders zunächst der Planetenträger mittels der Bremse abgebremst und/oder mechanisch gegen ein Umlaufen verriegelt und anschließend der Arbeitsraum mit Arbeitsmedium befüllt. Alternativ kann der Arbeitsraum auch im Nichtbremsbetrieb eine vergleichsweise geringe Teilfüllung aufweisen, welche erst dann vergrößert wird, wenn die Bremse vollständig oder weitgehend geschlossen ist. Aufgrund der vergleichsweise großen Bremskapazität einer Bremse kann gemäß einer alternativen Ausführungsform jedoch auch vorgesehen sein, dass Schließen der Bremse, das heißt das Abbremsen des Planetenträgers und das Befüllen des Arbeitsraumes des hydrodynamischen Retarders gleichzeitig auszuführen. Es muss lediglich sichergestellt werden, dass kein unerwünschter Verschleiß in der Bremse auftritt oder die maximale Bremskapazität überschritten wird, und demnach die maximale Füllung, insbesondere Teilfüllung des Arbeitsraumes vorgegeben werden, welche die Bremse im schlupfenden Zustand noch erträgt.

Gemäß einer Ausführungsform ist eine Füllstandsüberwachungseinrichtung vorgesehen, welche den aktuellen Füllstand des Arbeitsmediums im Arbeitsraum erfasst. Die Erfassung kann dabei unmittelbar im Arbeitsraum erfolgen oder auch außerhalb desselben indirekt. Beispielsweise kann die Füllstandserfassung in einem Nebenraum des hydrodynamischen Retarders erfolgen, der mit Arbeitsmedium in Abhängigkeit des Füllstands im Arbeitsraum mehr oder minder befüllt ist und der vorliegend in Anlehnung an des Prinzip der kommunizierenden Gefäße als kommunizierender Nebenraum des Retarders bezeichnet wird.

Die Füllstandserfassung kann quantitativ oder qualitativ erfolgen. Bei einer quantitativen Füllstandserfassung wird lediglich festgestellt, ob sich überhaupt Arbeitsmedium in dem Arbeitsraum des Retarders befindet oder ob dieser entleert ist. Bei einer qualitativen Erfassung wird der konkrete Füllstand stufenlos oder in verschiedenen Stufen erfasst. Die Erfassung kann ferner kontinuierlich oder in Intervallen erfolgen.

Es kann eine Bremssperreinrichtung vorgesehen, die mit der Füllstandsüberwachungseinrichtung in kommunikativer oder mechanischer Wirkverbindung steht und ein Betätigen der Bremse in Abhängigkeit des erfassten Füllstands sperrt. Eine solche Bremssperreinrichtung kann sowohl als rein elektronische Steuervorrichtung ausgeführt sein, die ein entsprechendes Brems- und/oder Sperrsignal zum Zulassen des Bremsens oder zum Sperren des Bremsens mittels der Bremse ausgibt. Alternativ kann die Bremssperreinrichtung auch als physikalisch oder mechanisch arbeitender Mechanismus ausgeführt sein. Auch Mischformen sind denkbar.

Gemäß einer vorteilhaften Ausführungsform weist die Füllstandsüberwachungseinrichtung einen im Arbeitsraum des Retarders oder einen in einem mit dem Arbeitsraum bezüglich des Füllstands mit Arbeitsmedium kommunizierenden Nebenraum des Retarders angeordneten Schwimmer auf.

Zusätzlich oder alternativ kann die Füllstandsüberwachungseinrichtung einen elektrischen, optischen oder akustischen Sensor und eine zugeordnete Auswerteeinheit umfassen, mittels welchen der Füllstand des Arbeitsraums oder eines bezüglich des Füllstands mit Arbeitsmedium kommunizierenden Nebenraumes des Retarders durch elektrische Widerstandsmessung, optische Signalmessung oder akustische Signalmessung erfasst wird.

Die Steuervorrichtung kann beispielsweise eine füllstandsabhängige Grenzdrehzahl berechnen oder auf eine füllstandsabhängige Grenzdrehzahlkennlinie oder Grenzdrehzahlkennlinienschar, die insbesondere in der Steuervorrichtung hinterlegt ist/sind, zugreifen, wobei die Steuervorrichtung ein Betätigen der Bremse mittels der Bremssperreinrichtung bei Füllständen sperrt, wenn die zugehörige aktuelle Drehzahl oberhalb der zugehörigen Grenzdrehzahl oder Grenzdrehzahlkennlinie liegt. Dies hat folgende Bewandtnis: Obwohl ein Betätigen der Bremse bei befülltem Arbeitsraum des Retarders, das heißt, dass dieser ein Bremsmoment erzeugt, grundsätzlich als hinsichtlich der Haltbarkeit/dem Verschleiß der Bremse nachteilig angesehen wird, kann ein solches Betätigen bei vergleichsweise kleinen Drehzahlen am Eingang des Planetengetriebes und/oder des Planetenträgers, das heißt beim Beschleunigen des Retarders auf vergleichsweise kleine Drehzahlen durch Betätigen der Bremse, zulässig sein, da nämlich das vom Retarder erzeugte Bremsmoment geschwindigkeitsabhängig ist, bezogen auf die Umlaufgeschwindigkeit des Primärrades des Retarders.

Wenn der Kraftfahrzeugantriebsstrang grundsätzlich derart ausgelegt ist, dass der Retarder beziehungsweise dessen Arbeitsraum im deaktivierten Zustand, das heißt, wenn keine Aktivierungsanforderung für den Retarder vorliegt, entleert sein soll, so stellt das Vorhandensein von Arbeitsmedium im Arbeitsraum des Retarders in diesem Zustand ein unerwünschtes Ereignis dar. Dieses Ereignis kann dazu führen, dass durch die vorteilhaften Maßnahmen ein Betätigen der Bremse bei der nächsten Aktivierungsanforderung für den Retarder verhindert beziehungsweise gesperrt wird, somit die Verfügbarkeit des Retarders eingeschränkt wird. Um nun in einem solchen unerwünschten Zustand die Verfügbarkeit des Retarders wieder zu erhöhen, kann gemäß einer erfindungsgemäßen Ausführung vorgesehen sein, dass bei einem Sperren des Betätigens der Bremse Maßnahmen eingeleitet werden, die ein Entleeren des Arbeitsraums im nächstmöglichen oder günstigen Zeitpunkt bewirken sollen. So kann beispielsweise nach dem genannten Zustand des Sperrens des Betätigens der Bremse abgewartet werden, bis die Drehzahl am Eingang des Planetengetriebes und/oder des Planetenträgers auf einen aktuellen Wert unterhalb der Grenzdrehzahl oder der Grenzdrehzahlkennlinie absinkt und dann ein Betätigen der Bremse auch ohne Aktivierungsanforderung beziehungsweise Aktivierungssignal für den Retarder erfolgen, sodass der Rotor derselben (zumindest das Primärrad) in Umlauf versetzt wird und ein Leerpumpen des Arbeitsraumes bewirkt.

Gemäß dieser erfindungsgemäßen Ausführungsform kann die Steuervorrichtung einen Retarderaktivierungssignaleingang aufweisen, an welchem ein Signal anliegt, das eine Aktivierungsanforderung für den Retarder signalisiert, und die Steuervorrichtung das genannte Sperren des Betätigens der Bremse trotz Aktivierungsanforderung bewirken, und nach dem Sperren, sobald eine aktuelle Drehzahl unterhalb der Grenzdrehzahl oder der Grenzdrehzahllinie vorliegt, unabhängig von einer weiteren Aktivierungsanforderung beziehungsweise auch dann, wenn keine Aktivierungsanforderung vorliegt, ein Betätigen der Bremse ansteuern.

Gemäß einer alternativen Ausgestaltung der Erfindung kann das Entleeren des Arbeitsraums des Retarders, wenn der unerwünschte Zustand einer Befüllung festgestellt und das Betätigen der Bremse entsprechend gesperrt wurde, auch mittels eines anderen Aggregats, beispielsweise durch Antreiben des Primärrades und/oder des Sekundärrades des hydrodynamischen Retarders mit einem Zusatzmotor, insbesondere Elektromotor erfolgen oder der Arbeitsraum kann mittels einer Pumpe leergepumpt werden.

Die Erfindung soll nachfolgend anhand eines Ausführungsbeispiels exemplarisch beschrieben werden.

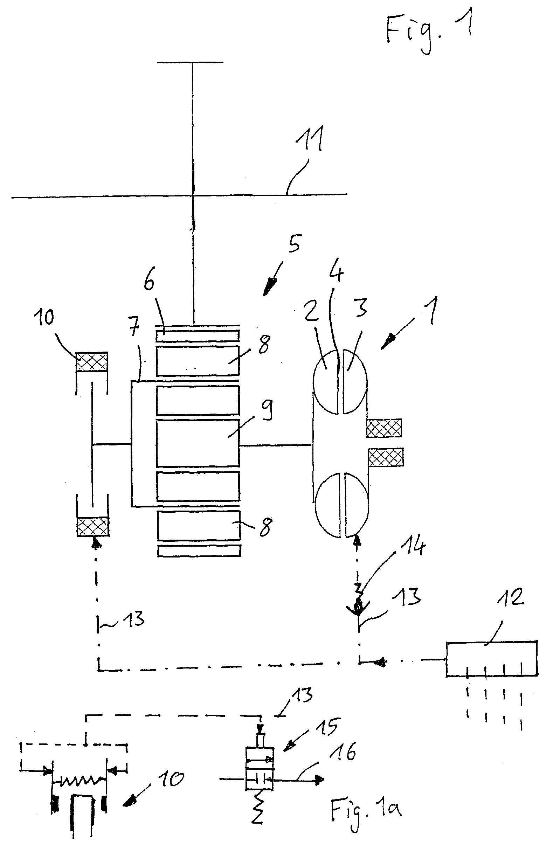

In der Figur 1 ist ein Teil eines Antriebsstrangs mit einem hydrodynamischen Retarder 1 mit dem Rotor 2, dem Stator 3 und dem durch Rotor 2 und Stator 3 gebildeten Arbeitsraum 4 dargestellt. Der Rotor wird über ein Planetengetriebe 5 mittels einem die Antriebsleistung zum hydrodynamischen Retarder 1 führenden Elements 11 angetrieben. Der Antriebsleistungsfluss erfolgt vom Element 11 zu dem Hohlrad 6, über die auf dem Planetenträger 7 getragenen Planetenräder 8, auf das Sonnenrad 9 und weiter zum Rotor 2.

Dem Planetenträger 7 ist eine Bremse 10 zugeordnet, mittels welcher der Planetenträger 7 vollständig abbremsbar ist, das heißt gegen ein weiteres Umlaufen verriegelbar ist.

Der Bremse 10 und dem hydrodynamischen Retarder 1 ist ein gemeinsames Steuersystem 12 zugeordnet, das einen Steuerdruck erzeugt, der sowohl das Befüllen des Arbeitsraumes 4 des hydrodynamischen Retarders 1 als auch das Abbremsen des Planetenträgers 7 mit der Bremse 10 steuert. Exemplarisch sind in der Figur 1 eine erste Möglichkeit zur Erzeugung verschiedener Betätigungsdruckbereiche des Steuerdrucks und in der Figur 1a eine zweite Möglichkeit hierzu dargestellt. Gemäß der Figur 1 ist in der Steuerdruckleitung 13 zu einer Befüllungssteuerungseinrichtung (nicht dargestellt) des hydrodynamischen Retarders 1 ein Rückschlagventil 14 positioniert, das erst oberhalb eines vorbestimmten Druckes öffnet. Die Bremse 10 hingegen wird auch unterhalb dieses vorbestimmten Druckes über die Steuerdruckleitung 13 mit Steuerdruck beaufschlagt und dadurch geschlossen.

Selbstverständlich könnte anstelle des Rückschlagventils 14 auch eine Drossel oder ein anderes geeignetes Element vorgesehen sein, insbesondere ein nicht regelbares Element, das einen konstanten Druckabfall erzeugt beziehungsweise konstanten Querschnitt aufweist, oder ein regelbares Drosselelement.

Bei der exemplarisch gemäß der Figur 1a dargestellten Ausführungsform arbeitet der Steuerdruck in der Steuerdruckleitung 13 gegen verschiedene Vorspannungen in der Bremse 10 und in der Befüllungssteuerungseinrichtung 15 des hydrodynamischen Retarders, die hier exemplarisch als Wegeventil dargestellt ist, welches den Zulauf 16 für Arbeitsmedium zum Arbeitsraum des Retarders öffnet und schließt. Die Vorspannung wird durch geeignete elastische Einrichtungen aufgebracht, wobei letztere jeweils als Feder dargestellt.

Selbstverständlich kommen auch andere Maßnahmen in Betracht, um die Bremse 10 und die Befüllung des hydrodynamischen Retarders 1 bei unterschiedlichen Steuerdrücken zu bewirken. So kann beispielsweise das Schließen der Bremse 10 eine mechanische oder elektromechanische oder hydraulische/pneumatische Betätigung einer Ventileinrichtung oder eines anderen geeigneten Elementes bewirken, das die Befüllung des Arbeitsraumes 4 des hydrodynamischen Retarders 1 freigibt.

## Patentansprüche

1. Antriebsstrang
1.1 mit einem hydrodynamischen Retarder (1), mittels welchem der Antriebsstrang hydrodynamisch abbremsbar ist; wobei
1.2 der hydrodynamische Retarder (1) einen angetriebenen Rotor (2) und eine Stator (3) oder einen angetriebenen Rotor (2) und einen gegenüber dem Rotor (2) gegenläufig angetriebenen Gegenlaufrotor aufweist, welche gemeinsam einen mit Arbeitsmedium befüllbaren und von diesem entleerbaren Arbeitsraum (4) ausbilden;
**dadurch gekennzeichnet, dass**
1.3 der hydrodynamische Retarder (1) über ein Planetengetriebe (5) an einem die Antriebsleistung zu dem hydrodynamischen Retarder (1) führenden Element (11) des Antriebsstrangs angeschlossen ist, und
1.4 das Planetengetriebe (5) ein treibend an dem Element (11) angeschlossenes Hohlrad (6), wenigstens ein von einem Planetenträger (7) drehbar getragenes Planetenrad (8) und ein treibend an dem Rotor (2) des hydrodynamischen Retarders (1) angeschlossenes Sonnenrad (9) aufweist, und
1.5 dem Planetenträger (7) eine Bremse (10) zugeordnet ist, mittels welcher der Planetenträger (7) in einem ersten Betriebszustand, dem Nichtbremsbetrieb des hydrodynamischen Retarders (1) freigebbar ist, sodass der Planetenträger (7) über eine Planetenträgerachse umlaufen kann, und in einem zweiten Betriebszustand, dem Bremsbetrieb des hydrodynamischen Retarders (1), abbremsbar und/oder festsetzbar ist.

2. Antriebsstrang gemäß Anspruch 1, **dadurch gekennzeichnet, dass** die Bremse (10) als nass-oder trockenlaufende Reibbremse ausgeführt ist.

3. Antriebsstrang gemäß Anspruch 2, **dadurch gekennzeichnet, dass** die Bremse (10) als Lamellenbremse, insbesondere umfassend eine Vielzahl von parallelen Lamellen mit Reibflächen ausgeführt ist.

4. Antriebsstrang gemäß Anspruch 2, **dadurch gekennzeichnet, dass** die Bremse (10) als Synchronelement mit Reibkegel ausgeführt ist.

5. Antriebsstrang gemäß einem der Ansprüche 1 bis 4, **dadurch gekennzeichnet, dass** die Bremse (10) als hydraulische oder elektromechanische Bremse ausgeführt ist.

6. Antriebsstrang gemäß Anspruch 5, **dadurch gekennzeichnet, dass** die Bremse (10) als selbstverstärkende hydraulische oder elektromechanische Bremse ausgeführt ist.

7. Antriebsstrang gemäß einem der Ansprüche 1 bis 6, **dadurch gekennzeichnet, dass** die Bremse (10) eine Überbrückungskupplung aufweist, mittels welcher die Bremse (10) mechanisch, insbesondere formschlüssig überbrückbar ist.

8. Antriebsstrang gemäß einem der Ansprüche 1 bis 7, **dadurch gekennzeichnet, dass** der Bremse (10) und dem hydrodynamischen Retarder (1) ein gemeinsames hydraulisches oder pneumatisches Steuersystem (12) zugeordnet ist, welches einen Steuerdruck erzeugt, mittels welchem das Ein- und Ausschalten des hydrodynamischen Retarders (1) durch Befüllen und Entleeren des Arbeitsraumes (4) gesteuert wird und mittels welchem das Öffnen und Schließen der Bremse (10) gesteuert wird.

9. Antriebsstrang gemäß Anspruch 8, **dadurch gekennzeichnet, dass** die Bremse (10) einen vom Steuerdruck des gemeinsamen Steuersystems (12) betätigten Aktuator zum Öffnen und Schließen der Bremse (10) aufweist und der hydrodynamische Retarder (1) eine vom Steuerdruck betätigte Befüllungssteuerungseinrichtung (15) aufweist, wobei der Aktuator und/oder die Befüllungssteuerungseinrichtung (15) entgegen dem Steuerdruck derart vorgespannt und/oder mittels einer Ventileinrichtung (14) vom Steuerdruck abgetrennt sind, dass der Aktuator die Bremse (10) bei einem anderen, insbesondere niedrigeren Steuerdruck schließt, als die Befüllungssteuerungseinrichtung (15) den Arbeitsraum (4) des hydrodynamischen Retarders (1) mit Arbeitsmedium befüllt.

10. Verfahren zum Steuern der Betätigung eines hydrodynamischen Retarders (1) in einem Antriebsstrang, insbesondere Kraftfahrzeugantriebsstrang, gemäß den Merkmalen wenigstens einer der Ansprüche 1 bis 9, **dadurch gekennzeichnet, dass** zum Einschalten des hydrodynamischen Retarders (1) der Planetenträger (7) mittels der Bremse (10) abgebremst und/oder mechanisch gegen ein Umlaufen verriegelt wird und der Arbeitsraum (4) des hydrodynamischen Retarders (1) mit Arbeitsmedium befüllt wird, und zum Ausschalten des hydrodynamischen Retarders (1) der Arbeitsraum (4) vom Arbeitsmedium entleert und die Bremse (10) zum Freigeben des Umlaufens des Planetenträgers (7) geöffnet wird.

11. Verfahren gemäß Anspruch 10, **dadurch gekennzeichnet, dass** zum Einschalten des hydrodynamischen Retarders (1) zunächst der Planetenträger (7) mittels der Bremse (10) abgebremst und/oder mechanisch gegen ein Umlaufen verriegelt wird und anschließend der Arbeitsraum (4) mit Arbeitsmedium befüllt oder über eine vorgegebene maximale Teilfüllung hinaus befüllt wird.

12. Verfahren gemäß Anspruch 11, **dadurch gekennzeichnet, dass** das Abbremsen des Planetenträgers (7) und/oder das mechanische Verriegeln des Planetenträgers (7) sowie das Befüllen des Arbeitsraums (4) mit Arbeitsmedium durch einen gemeinsamen Steuerdruck angesteuert wird, wobei das Abbremsen des Planetenträgers (7) und/oder das mechanische Verriegeln des Planetenträgers (7) bei einem anderen, insbesondere niedrigeren Steuerdruck erfolgt, als das Befüllen des Arbeitsraumes (4).

## Claims

1. Drivetrain
1.1 having a hydrodynamic retarder (1) by means of which the drivetrain can be hydrodynamically braked; wherein
1.2 the hydrodynamic retarder (1) has a driven rotor (2) and a stator (3), or has a driven rotor (2) and a counter-rotor driven in the opposite direction to the rotor (2), which together form a working chamber (4) which can be filled with working medium and emptied of said working medium;
**characterized in that**
1.3 the hydrodynamic retarder (1) is connected by way of a planetary gear set (5) to an element (11), which conducts the drive power to the hydrodynamic retarder (1), of the drivetrain, and
1.4 the planetary gear set (5) has an internal gear (6), which is drivingly connected to the element (11), at least one planet gear (8), which is rotatably supported by a planet carrier (7), and a sun gear (9), which is drivingly connected to the rotor (2) of the hydrodynamic retarder (1), and
1.5 the planet carrier (7) is assigned a brake (10) by means of which, in a first operating state, the non-braking operating mode of the hydrodynamic retarder (1), the planet carrier (7) can be released such that the planet carrier (7) can rotate about a planet carrier axis, and in a second operating state, the braking operating mode of the hydrodynamic retarder (1), the planet carrier (7) can be braked and/or immobilized.

2. Drivetrain according to Claim 1, **characterized in that** the brake (10) is in the form of a wetrunning or dry-running friction brake.

3. Drivetrain according to Claim 2, **characterized in that** the brake (10) is in the form of a lamellar brake, in particular comprising a multiplicity of parallel lamellae with friction surfaces.

4. Drivetrain according to Claim 2, **characterized in that** the brake (10) is in the form of a synchronization element with friction cone.

5. Drivetrain according to one of Claims 1 to 4, **characterized in that** the brake (10) is in the form of a hydraulic or electromechanical brake.

6. Drivetrain according to Claim 5, **characterized in that** the brake (10) is in the form of a selfboosting hydraulic or electromechanical brake.

7. Drivetrain according to one of Claims 1 to 6, **characterized in that** the brake (10) has a lockup clutch by means of which the brake (10) can be mechanically bridged, in particular in positively locking fashion.

8. Drivetrain according to one of Claims 1 to 7, **characterized in that** the brake (10) and the hydrodynamic retarder (1) are assigned a common hydraulic or pneumatic control system (12) which generates a control pressure by means of which the activation and deactivation of the hydrodynamic retarder (1) by charging and evacuation of the working chamber (4) is controlled and by means of which the opening and closing of the brake (10) is controlled.

9. Drivetrain according to Claim 8, **characterized in that** the brake (10) has an actuator, which is actuated by the control pressure of the common control system (12), for the opening and closing of the brake (10), and the hydrodynamic retarder (1) has a charging control device (15) which is actuated by the control pressure, wherein the actuator and/or the charging control device (15) are preloaded counter to the control pressure, and/or are separated from the control pressure by way of a valve device (14), such that the actuator closes the brake (10) in the presence of a different control pressure, in particular a lower control pressure, than that with which the charging control device (15) charges the working chamber (4) of the hydrodynamic retarder (1) with working medium.

10. Method for controlling the actuation of a hydrodynamic retarder (1) in a drivetrain, in particular motor vehicle drivetrain, as per the features of at least one of Claims 1 to 9, **characterized in that**, for the activation of the hydrodynamic retarder (1), the planet carrier (7) is braked, and/or mechanically blocked against rotation, by means of the brake (10) and the working chamber (4) of the hydrodynamic retarder (1) is charged with working medium, and for the deactivation of the hydrodynamic retarder (1), the working chamber (4) is emptied of the working medium and the brake (10) is opened so as to permit the rotation of the planet carrier (7).

11. Method according to Claim 10, **characterized in that**, for the activation of the hydrodynamic retarder (1), firstly the planet carrier (7) is braked, and/or mechanically blocked against rotation, by way of the brake (10), and secondly the working chamber (4) is charged with working medium or is charged to beyond a predefined maximum partial charge.

12. Method according to Claim 11, **characterized in that** the braking of the planet carrier (7) and/or the mechanical locking of the planet carrier (7) and the charging of the working chamber (4) with working medium are triggered by a common control pressure, wherein the braking of the planet carrier (7) and/or the mechanical locking of the planet carrier (7) are/is performed in the presence of a different control pressure, in particular a lower control pressure, than the charging of the working chamber (4).

## Revendications

1. Transmission
1.1 avec un frein hydrodynamique (1), au moyen duquel la transmission peut être freinée de façon hydrodynamique; dans laquelle
1.2 le frein hydrodynamique (1) présente un rotor entraîné (2) et un stator (3) ou un rotor entraîné (2) et un rotor inverse entraîné en sens contraire du rotor (2), qui forment ensemble une chambre de travail (4) pouvant être remplie d'un milieu de travail et vidée de celui-ci;
**caractérisée en ce que**
1.3 le frein hydrodynamique (1) est relié par un engrenage planétaire (5) à un élément (11) de la transmission amenant la puissance d'entraînement au frein hydrodynamique (1), et
1.4 l'engrenage planétaire (5) présente une couronne d'entraînement (6) reliée à l'élément (11), au moins une roue planétaire (8) portée de façon rotative par un porte-satellites (7) et une roue solaire d'entraînement (9) reliée au rotor (2) du frein hydrodynamique (1), et
1.5 un frein (10) est associé au porte-satellites (7), au moyen duquel le porte-satellites (7) peut être libéré dans un premier état de fonctionnement, le fonctionnement sans freinage du frein hydrodynamique (1), de telle manière que le porte-satellites (7) puisse tourner sur un axe de porte-satellites, et puisse être freiné et/ou bloqué dans un deuxième état de fonctionnement, le fonctionnement de freinage du frein hydrodynamique (1).

2. Transmission selon la revendication 1, **caractérisée en ce que** le frein (10) est réalisé sous forme de frein à frottement humide ou sec.

3. Transmission selon la revendication 2, **caractérisée en ce que** le frein (10) est réalisé sous forme de frein à disques multiples, comprenant en particulier une multiplicité de disques parallèles avec des faces de friction.

4. Transmission selon la revendication 2, **caractérisée en ce que** le frein (10) est réalisé sous forme d'un élément synchrone avec un cône à friction.

5. Transmission selon l'une quelconque des revendications 1 à 4, **caractérisée en ce que** le frein (10) est réalisé sous forme de frein hydraulique ou électromécanique.

6. Transmission selon la revendication 5, **caractérisée en ce que** le frein (10) est réalisé sous forme de frein hydraulique ou électromécanique autorenforçateur.

7. Transmission selon l'une quelconque des revendications 1 à 6, **caractérisée en ce que** le frein (10) présente un couplage de pontage, au moyen duquel le frein (10) peut être ponté mécaniquement, en particulier par emboîtement.

8. Transmission selon l'une quelconque des revendications 1 à 7, **caractérisée en ce qu'**un système de commande hydraulique ou pneumatique commun (12) est associé au frein (10) et au frein hydrodynamique (1), lequel produit une pression de commande, au moyen de laquelle l'enclenchement et le déclenchement du frein hydrodynamique (1) est commandé par le remplissage et la vidange de la chambre de travail (4) et au moyen de laquelle l'ouverture et la fermeture du frein (10) est commandée.

9. Transmission selon la revendication 8, **caractérisée en ce que** le frein (10) présente un actionneur actionné par la pression de commande du système de commande commun (12) pour l'ouverture et la fermeture du frein (10) et le frein hydrodynamique (1) présente un dispositif de commande de remplissage (15) actionné par la pression de commande, dans laquelle l'actionneur et/ou le dispositif de commande de remplissage (15) sont précontraints à l'encontre de la pression de commande et/ou sont séparés de la pression de commande au moyen d'un dispositif de soupape (14), de telle manière que l'actionneur ferme le frein (10) pour une autre pression de commande, en particulier moins élevée, que celle pour laquelle le dispositif de commande de remplissage (15) remplit la chambre de travail (4) du frein hydrodynamique (1) avec du milieu de travail.

10. Procédé de commande de l'actionnement d'un frein hydrodynamique (1) dans une transmission, en particulier une transmission de véhicule à moteur, selon les caractéristiques d'au moins une des revendications 1 à 9, **caractérisé en ce que**, pour l'enclenchement du frein hydrodynamique (1), on freine le porte-satellites (7) au moyen du frein (10) et/ou on le verrouille mécaniquement contre une rotation et on remplit la chambre de travail (4) du frein hydrodynamique (1) avec un milieu de travail, et pour déclencher le frein hydrodynamique (1), on vide la chambre de travail (4) du milieu de travail et on ouvre le frein (10) pour libérer la rotation du porte-satellites (7).

11. Procédé selon la revendication 10, **caractérisé en ce que**, pour enclencher le frein hydrodynamique (1), on freine d'abord le porte-satellites (7) au moyen du frein (10) et/ou on le verrouille mécaniquement contre une rotation et ensuite on remplit la chambre de travail (4) avec du milieu de travail ou on la remplit au-delà d'un remplissage partiel maximal prédéterminé.

12. Procédé selon la revendication 11, **caractérisé en ce que** l'on commande le freinage du porte-satellites (7) et/ou le verrouillage mécanique du porte-satellites (7) ainsi que le remplissage de la chambre de travail (4) avec du milieu de travail au moyen d'une pression de commande commune, dans lequel le freinage du porte-satellites (7) et/ou le verrouillage mécanique du porte-satellites (7) se produit à une autre pression de commande, en particulier moins élevée, que le remplissage de la chambre de travail (4).
